# EUROPÄISCHE PATENTSCHRIFT

(11) **EP 0 416 316 B1**
(45) Veröffentlichungstag und Bekanntmachung des Hinweises auf die Patenterteilung: **13.10.1993**
(21) Anmeldenummer: 90115342.9
(22) Anmeldetag: 10.08.1990
(51) Int. Cl.: B02C 23/04, B02C 18/12, A01G 3/00

(54) **Häcksler mit Auffangvorrichtung für das Häckselgut**
Shredder with catching device for the shredded material
Broyeur avec réceptacle pour les débris broyés

(30) Priorität: 02.09.1989 DE 3929260
(43) Veröffentlichungstag der Anmeldung: 13.03.1991
(73) Patentinhaber: SABO-MASCHINENFABRIK AKTIENGESELLSCHAFT, D-51645 Gummersbach (DE)
(72) Erfinder: Ostermeier, Heinrich, D-5000 Köln 90 (DE); Dell, Dieter, D-5276 Wiehl 1 (DE); Hartmann, Dietmar, D-5276 Wiehl 1 (DE)
(74) Vertreter: Harwardt, Günther, Dipl.-Ing.

(56) Entgegenhaltungen:
- AU-B- 452 098
- DE-A- 3 325 766
- DE-U- 8 605 558
- FR-A- 2 206 900
- FR-A- 2 350 049
- US-A- 3 553 947

## Beschreibung

Die Erfindung betrifft einen Häcksler zur Zerkleinerung von Gartenabfällen, mit einem Schneidwerk, das ein drehend angetriebenes Messer und einen Gegenhalter umfaßt, welche in einem Gehäuse angeordnet sind, dessen Auswurföffnung eine Auffangvorrichtung für das Häckselgut zugeordnet ist.

Es ist bei Häckslern bekannt, an das untere Ende des Schneidwerkes bzw. das das Schneidwerk aufnehmende Gehäuse an ein Antriebsgehäuse anzuschließen, das die Auswurföffnung und den Antriebsmotor umfaßt. In dieser wird ein Auffangkasten bevorratet gehalten, dessen eine Wandung klappbar gestaltet ist, um in das Antriebsgehäuse eingeschoben werden zu können. Zur Benutzung als Auffangkasten ist dieser aus dem Antriebsgehäuse herauszuziehen und die nach innen geklappte Gehäusewandung wieder aufzurichten und an den Nachbarwandungen zu verriegeln. Dieser Auffangkasten ist aus Blech hergestellt. Das Antriebsgehäuse dient als Schutz gegen unbeabsichtigtes Hineingreifen in das Schneidwerk. Der Auffangkasten ist am Antriebsgehäuse einhängbar (DE 31 25 834 C2). Das Antriebsgehäuse vergrößert das Gewicht. Darüberhinaus ist der aus Blech hergestellte Auffangkasten ungünstig in der Handhabung.

Gartenhäcksler werden vor allen Dingen im privaten Bereich eingesetzt und für das Häckseln von Gartenabfällen bzw. Ästen oder holzhaltigen Abfällen benutzt.

Der Erfindung liegt die Aufgabe zugrunde, einen Häcksler zu schaffen, dessen Auffangvorrichtung leicht und einfach handhabbar ist und Sicherheit bei unbeabsichtigtem Eingreifen durch eine Bedienungsperson bei der Bedienung bietet.

Diese Aufgabe wird erfindungsgemäß dadurch gelöst, daß die Auffangvorrichtung aus einem von einer Hülle umkleideten Rahmen besteht und der Rahmen Mittel zur Festlegung am Gehäuse oder Traggestell des Häckslers aufweist, und daß der Rahmen mit einer Betätigung für eine das Schneidwerk ein- oder ausschaltetende Schalteinrichtung versehen und das Schneidwerk nur dann einschaltbar ist, wenn die Schalteinrichtung von der Betätigung beaufschlagt ist.

Durch die rahmenartige Gestaltung der von einer Hülle umkleideten Auffangvorrichtung wird eine leicht tragbare Einheit erzielt, die aufgrund der Rahmenausbildung gleichzeitig Sicherheit gegen das unbeabsichtigte Eingreifen einer Bedienungsperson in den Bereich des Schneidwerkes bietet. Darüberhinaus wird durch die Ausbildung als Hülle in Verbindung mit dem Rahmen eine leichtgewichtige Konstruktion für die Auffangvorrichtung erreicht, die einfach für den Transport des Häckselgutes genutzt werden kann. Die Einwurföffnung kann zum Ausschütten und zum gezielten Verteilen des Häckselgutes genutzt werden. Ferner kann durch die Betätigung einer Schalteinrichtung durch die Auffangsvorrichtung die Sicherheit erhöht werden.Es kann auf zusätzliche Abdeckungen verzichtet werden.

Eine Auffangsvorrichtung, bestehend aus einem von einem Gewebe umkleideten Rahmen, ist für Rasenmäher aus der US-A 3 553 947 bekannt.

In weiterer Ausgestaltung ist vorgesehen, daß der Rahmen aus im Querschnitt runden Stäben gebildet ist. Diese sind miteinander verschweißt.

Nach einem weiteren wesentlichen Merkmal ist vorgesehen, daß die Hülle aus einer Kunststoffbahn gebildet ist. Zur Erhöhung der Tragfestigkeit kann die Hülle mit einer Gewebeeinlage verstärkt sein.

Ferner ist vorgesehen, daß ein Teil der Hülle als Klappe gestaltet ist und mit dem festen Hüllenabschnitt durch Knöpfen, durch Druckknöpfe, Reißverschlüsse oder Klettverschluß verbindbar ist.

Durch diese Ausbildung wird erreicht, daß auf der einen Seite genügend Sicherheit gegen Eingriff durch die Bedienungsperson in den Bereich des Schneidwerkes gewährleistet ist, daß auf der anderen Seite aber auch die Auffangvorrichtung durch Öffnen dazu genutzt werden kann, das Häckselgut unmittelbar auf den Boden abzulegen. Sie dient in diesem Zustand als reine Sicherheitsvorrichtung gegen das ausgeworfene Häckselgut und gegen den Eingriff in den Bereich des Schneidwerkes.

Die Zuordnung dieser Funktion zu der Auffangvorrichtung bringt den Vorteil mit sich, daß gegenüber den bekannten Einrichtungen auf gesonderte Gehäuseabschnitte, die das Schneidwerk so überdecken, daß ein Eingreifen von außen nicht möglich ist, entbehrlich macht. Es wird somit an Gewicht bei dem Häcksler selbst eingespart. Es ist ausreichend, wenn das Häckslergehäuse über einen einfachen Rahmen auf dem Boden abgestützt ist.

Für den Fall, daß der Häcksler elektromotorisch angetrieben ist, ist vorgesehen, daß die Schalteinrichtung ein elektrischer Tastschalter ist, der verdeckt im Gehäuse angeordnet ist.

Alternativ kann es auch vorgesehen sein, daß die Schalteinrichtung eine Schaltkupplung ist. Der Einsatz einer solchen Schaltkupplung ist insbesondere dann günstig, wenn der Häcksler durch eine Brennkraftmaschine angetrieben ist. Die Schaltkupplung trennt das Schneidwerk antriebsmäßig von der Brennkraftmaschine. Die Brennkraftmaschine kann weiterlaufen und muß nicht neu gestartet werden, wenn beispielsweise die gefüllte Auffangvorrichtung entleert werden soll.

Um das Stillsetzen des Schneidwerkes zu beschleunigen, kann zusätzlich eine Bremse vorhanden sein. Die Bremse fällt bei Betätigung der Schaltkupplung im Sinne des Ausrückens automatisch ein und bremst das rotierende Messer ab.

Da beim Abschalten, d.h. bei Unterbrechung des Stromkreises für einen Elektromotor immer noch ein Nachlauf des Schneidwerkes gegeben ist, ist zur Gewährleistung, daß das Schneidwerk still steht, eine bestimmte Zeit vorzusehen, innerhalb der eine Entfernung der Auffangvorrichtung aus dem Bereich der Auswurföffnung des Gehäuses nicht möglich sein soll. Aus diesem Grunde ist nach der Erfindung vorgeschlagen, daß die Betätigung einen am Rahmen unverlierbar gehaltenen Schraubknopf umfaßt, dessen Gewindeschaft eine Durchgangsbohrung des Gehäuses durchgreift und mit seinem Ende den korrespondierend zur Durchgangsbohrung im Inneren des Gehäuses angeordneten Tastschalter im eingeschraubten Zustand beaufschlagt. Alternativ kann die Betätigung ein am Rahmen unverlierbar gehaltener federbelasteter Bolzen sein, dessen Schaft eine Durchgangsbohrung des Gehäuses durchgreift und mit seinem Ende den korrespondierend zur Durchgangsbohrung im Innern des Gehäuses oder Gestells angeordneten Tastschalter im eingeschobenen Zustand beaufschlagt.

Das Herausschrauben des Schraubknopfes aus der Gewindebohrung des Gehäuses erfordert eine solch lange Zeit, daß auf jeden Fall sichergestellt ist, daß das Schneidwerk stillsteht, wenn die Auffangvorrichtung von den Mitteln zur Festlegung am Gehäuse oder Traggestell des Häckslers entfernt werden kann.

Alternativ ist es möglich, die Betätigung aus einem am Rahmen der Auffangvorrichtung gegen die Kraft einer Verschlußfeder schwenkbaren Tragegriff zu bilden, der über einen Betätigungshebel durch einen Durchbruch des Gehäuses greift und mit diesem den Tastschalter beaufschlagt. Eine solche Ausführungsform kommt insbesondere dann in Betracht, wenn eine Schaltkupplung und eine Bremse vorgesehen sind.

Um eine Überbefüllung der Auffangvorrichtung zu verhindern, ist des weiteren vorgesehen, daß der Rahmen über untere Anlenkpunkte am Traggestell schwenkbar abgestützt ist und der Betätigungshebel zusätzlich mit einer Stützfläche an einem Bolzen abgestützt ist, zu dem er nach Überschreiten eines vorgestimmten Füllgewichtes der Auffangvorrichtung gegen die Kraft der Verschlußfeder außer Eingriff bringbar ist. Der Tragegriff schwenkt bei Überschreiten des zulässigen Gewichtes aus der Verschlußstellung heraus und der Betätigungshebel gibt den Tastschalter frei, der den Stromkreis unterbricht, so daß das Schneidwerk stillgesetzt wird. Der Schwenkweg kann dabei so begrenzt werden, daß die Auffangvorrichtung immer noch gegenüber der Auswurföffnung des Gehäuses mit einem geringsmöglichen Abstand gehalten wird, so daß ein Eingreifen in das Schneidwerk durch den Spalt zwischen der Anlagefläche der Auffangvorrichtung und dem Gehäuse nicht möglich ist.

Für den Fall, daß ein schwenkbarer Tragegriff mit einem Riegelansatz vorgesehen ist, ist vorgeschlagen, daß der Durchbruch, den der Riegelansatz durchgreift, einem das Schneidwerk überdeckenden Deckel des Gehäuses zugeordnet ist. Durch diese Maßnahme wird die gleiche Sicherheit hinsichtlich des Betriebs des Häckslers erreicht, wie bei der vorher beschriebenen Maßnahme der Zuordnung der Einhängemittel zum Deckel.

In weiterer Ausgestaltung der Erfindung wird vorgeschlagen, daß die Mittel zur Festlegung des Rahmens am Gehäuse einem das Schneidwerk überdeckenden Deckel des Gehäuses zugeordnet sind. Zur Reinigung bzw. zum Wechsel der Messerscheibe des Schneidwerkes ist eine Revisionsöffnung im Gehäuse vorgesehen, die vom Deckel überdeckt wird. Durch die Zuordnung der Anhängemittel zu diesem Deckel ist gewährleistet, daß dann, wenn der Deckel versehentlich nicht montiert ist, auch die Anbringung der Auffangvorrichtung nicht möglich ist. Damit ist auch gewährleistet, daß der Stromkreis oder die Kupplung zum Einrücken des Antriebes nicht betätigt werden können. Der Häcksler kann also in diesem Zustand nicht in Betrieb gesetzt werden.

Bevorzugte Ausführungsbeispiele der Erfindung sind in der Zeichnung schematisch dargestellt.

Es zeigt
- Figur 1: eine Seitenansicht des Häckslers mit angehängter Auffangvorrichtung,
- Figur 2: den Rahmen der Auffangvorrichtung in perspektivischer Darstellung,
- Figur 3: die Auffangvorrichtung mit Hülle in Vorderansicht bei geschlossener Klappe,
- Figur 4: eine Ansicht entsprechend Figur 3 bei geöffneter Klappe,
- Figur 5: einen Schnitt durch das Gehäuse mit Schneidwerk und Antrieb,
- Figur 6: eine Einzelheit der Betätigung des Tastschalters über einen Schraubknopf im vergrößerten Maßstab,
- Figur 7: eine Einzelheit bezüglich der Betätigung des Tastschalters über den schwenkbaren Tragegriff im vergrößerten Maßstab

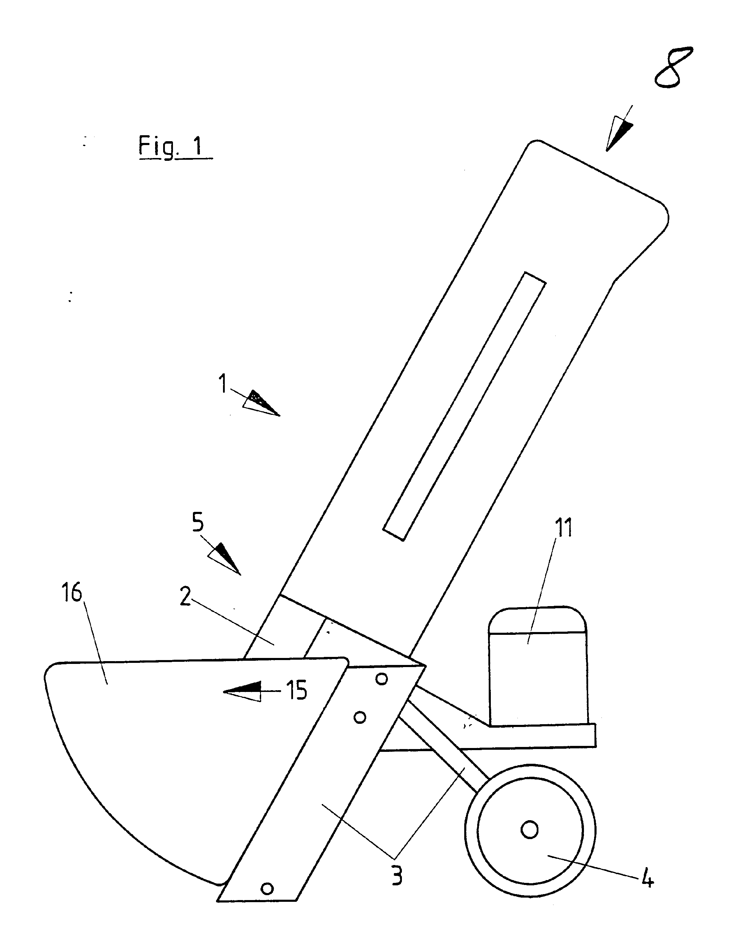

Der Häcksler 1 gemäß Figur 1 besteht aus dem Gehäuse 2, an dem das Traggestell 3 mit den Rädern 4 angebracht ist. Nach oben erstreckt sich vom Gehäuse 2 aus ein Trichter, in den das zu häckselnde Gut eingefüllt wird. An das Gehäuse 2 und insbesondere dessen Auswurföffnung 15 schließt sich nach unten hin die Auffangvorrichtung 16 an. Die Auffangvorrichtung 16 ist entweder mit dem Gehäuse 2 oder dem Traggestell 3 verbindbar, um sie in Hinsicht auf die Auswurföffnung 15 zu halten, wie nachfolgend noch näher beschrieben ist.

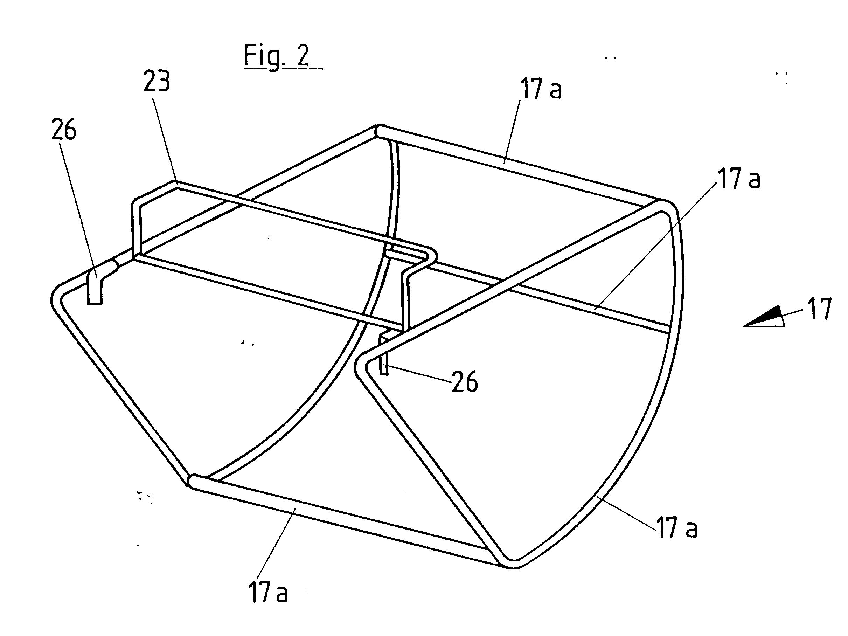

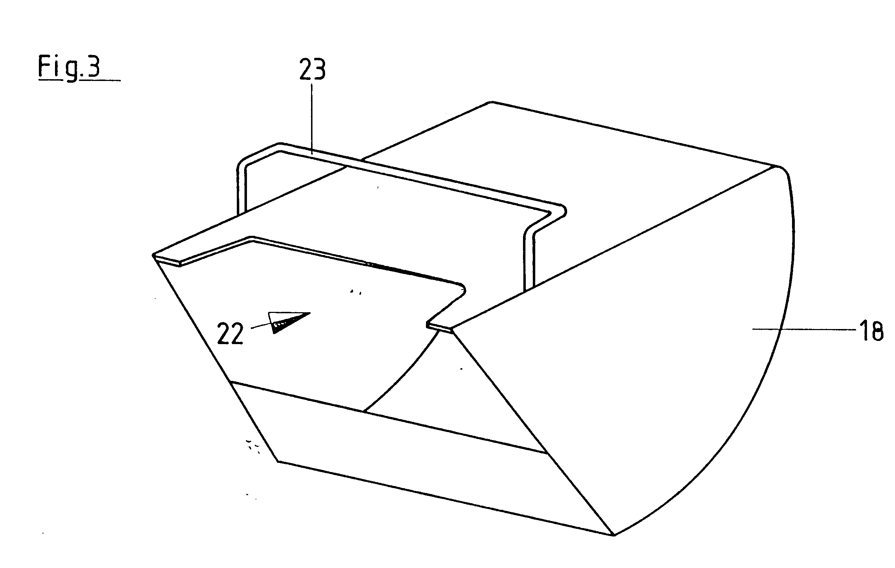

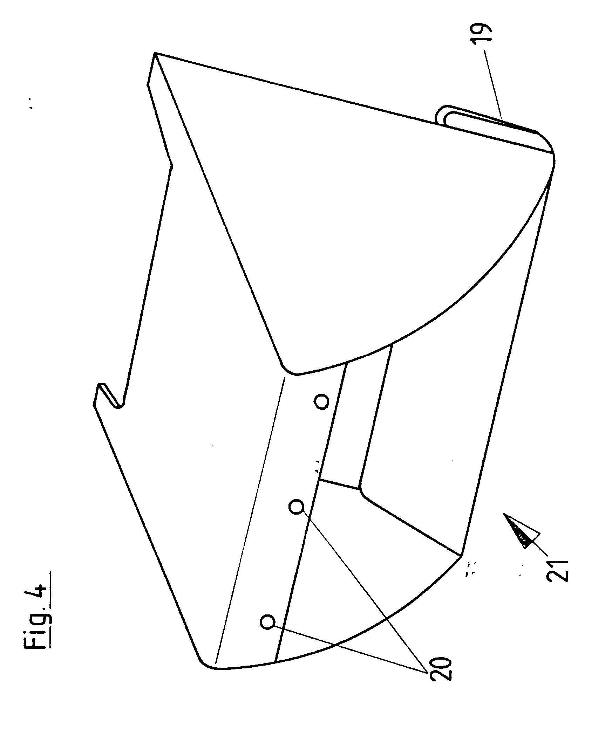

Die Auffangvorrichtung 16 ist, wie aus den Figuren 2 bis 4 ersichtlich aus einem Rahmen 17, der aus miteinander verschweißten Stäben 17a besteht, und der den Rahmen 17 umgebenden Hülle 18 gebildet. Die Hülle 18 umkleidet den Rahmen 17 und läßt in Richtung auf das Gehäuse 2 eine Öffnung frei, durch welche das Häckselgut aus der Auswurföffnung 15 des Häckslers 1 in die Auffangvorrichtung 16 gelangen kann. In der Seitenansicht entspricht die Auffangvorrichtung 16 in etwa einem Kreisausschnitt. Die der Einfüllöffnung 22 abgewandte Fläche der Hülle 18 ist mit einer Öffnung 21 versehen, die durch eine Klappe 19 verschließbar ist. Die Hülle 18 ist aus einer durch eine Gewebeeinlage verstärkte und luftundurchlässige Folie gebildet. Die Klappe 19 ist mit dem ortsfesten Teil der Hülle 18, insbesondere deren die Öffnung 21 umgebenden Ränder über Druckknöpfe 20 verbindbar. Die als Druckknöpfe 20 ausgebildeten Verschlüsse können auch in Form von Klettverschlüssen, Reißverschlüssen oder dgl. gestaltet sein.

Der Rahmen 17 kann mit Einhängehaken 26 versehen sein, die zum Einhängen an entsprechenden Einhängebolzen 27, die dem Traggestell 3 oder dem Gehäuse 2 zugeordnet sind, vorgesehen sind. Die Anordnung derselben wird nachfolgend in Verbindung mit den einzelnen Möglichkeiten der Anlenkung noch näher beschrieben.

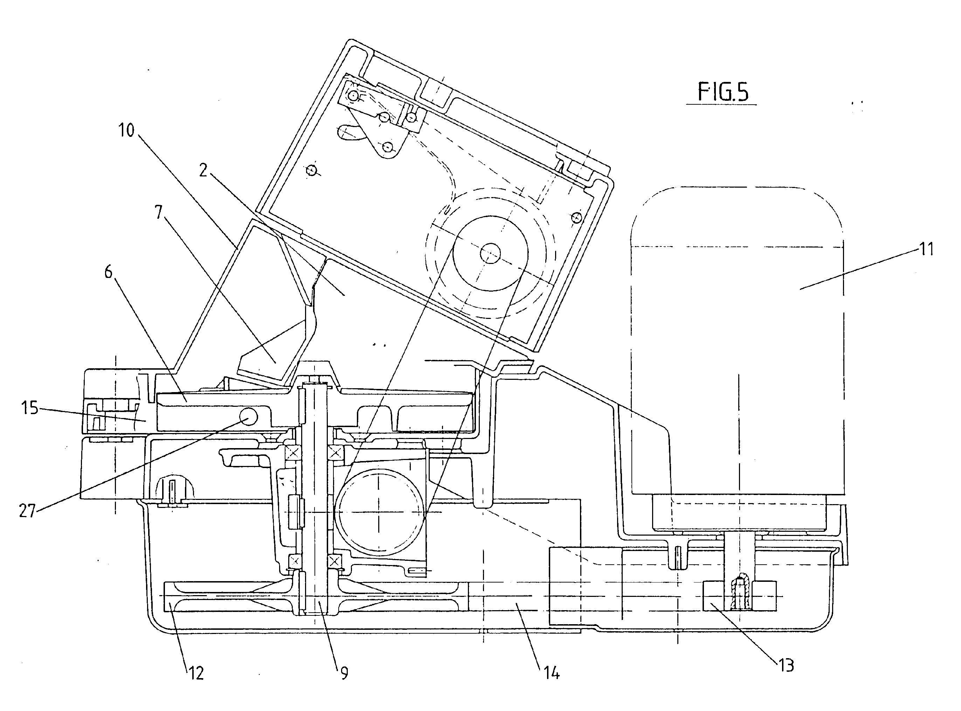

Wie aus Figur 5 ersichtlich, ist in dem Gehäuse 2 das Schneidwerk 5 angeordnet. Das Schneidwerk 5 umfaßt das auf der Antriebswelle 9 gelagerte Messer 6. Die Antriebswelle 9 ist in einem Lager 8 im Gehäuse 2 drehbar gehalten. Die Schneiden des Messers 6 arbeiten mit einem Gegenhalter 7 zusammen, der im Gehäuse 2 lösbar befestigt ist. Der Gegenhalter 7 kann zum Austausch des Messers 6 ausgebaut werden. Zur Erreichung der Zugänglichkeit ist das Gehäuse 2 mit einer Öffnung versehen, die durch einen Deckel 10 verschlossen ist. An die Antriebswelle 9 ist direkt ein Motor 11 mit seiner Antriebswelle anschließbar. Für den Fall jedoch, daß eine Untersetzung erforderlich ist, ist die Antriebswelle 9 mit einer Riemenscheibe 12 versehen, über die ein zu der Riemenscheibe 13 des Motors 11 führender Treibriemen 14 gelegt ist. Der Motor 11 ist im Abstand zum Messer 6 und der Antriebswelle 9 auf einer Konsole gelagert, die mit dem Gehäuse 2 verbunden ist. Nach vorne hin weist das Gehäuse 2 die Auswurföffnung 15 auf, die in die Auffangvorrichtung 16 mündet, wenn diese montiert ist.

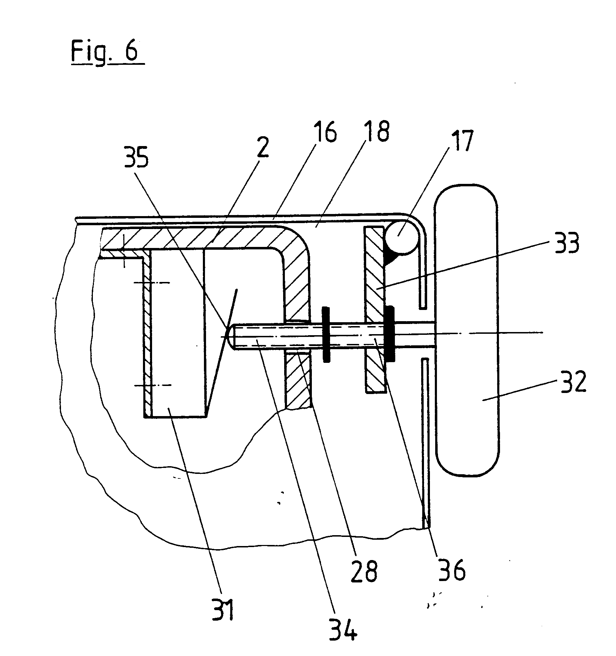

Bei der Ausführungsform nach Figur 6 sind dem Deckel 10 Einhängebolzen 27 zugeordnet, über welche die Einhängehaken 26, die an dem nach oben weisenden Ende des Rahmens 17 angebracht sind, greifen werden.

Ferner ist in einer der beiden Seitenwänden des Gehäuses 2 eine Durchgangsbohrung 28 angeordnet. Im Inneren des Gehäuses 2 ist im Bereich dieser Durchgangsbohrung 28 ein Tastschalter 31 angeordnet. Der Auffangvorrichtung 16 ist ein Schraubknopf 32 zugeordnet. Dieser ist unverlierbar in einem als Gewindebohrung 36 in einem als Halter gestaltetes Schraubknopflager 33 am Rahmen 17 gehalten. Bei eingehängter Auffangvorrichtung 16 kann der Gewindeschaft 34 des Schraubknopfes 32 die Bohrung 28 durchgreifen. Das Ende 35 des Gewindeschaftes 34 betätigt dann, wenn eine genügende Einschraubtiefe erzielt wurde, den Tastschalter 31. Der Stromkreis ist geschlossen, so daß der Motor 11 das Messer 6 des Schneidwerkes 5 antreiben kann. Hierdurch ist gewährleistet, daß nur bei eingeschraubtem Schraubknopf 32 und eingehängter Auffangvorrichtung 16 das Schneidwerk 5 des Häckslers 1 in Betrieb gesetzt werden kann. Wenn die Auffangvorrichtung 16 gefüllt ist, kann selbst dann, wenn die Bedienungsperson vergißt, den Motor 11 stillzusetzten, nicht die Gefahr eintreten, daß unbeabsichtigt die Auffangvorrichtung 16 entfernt werden kann und die Auswurföffnung 15 freiliegt. Zur Entfernung der Auffangvorrichtung 16 muß zunächst der Schaft des Schraubknopfes 32 aus der Bohrung 28 herausgeschraubt werden. Dadurch wird der Tastschalter 31 im Sinne des Öffnens betätigt. Der Vorgang des Herausschraubens des Schraubknopfes 32 nimmt soviel Zeit in Anspruch, daß dann, wenn die Auffangvorrichtung 16 abgenommen werden kann, gewährleistet ist, daß das Messer 6 stillsteht. Die Zuordnung der Einhängebolzen 27 zum Deckel 10 hat auch den Vorteil, daß ein Einhängen der Auffangvorrichtung 16 und damit Betätigen des Häckslers 1 nur dann möglich ist, wenn der Lagerdeckel 10 geschlossen ist. Hierdurch wird gewährleistet, daß dann, wenn ein Messerwechsel vorgenommen wurde, ein Inbetriebsetzen nur möglich ist, wenn die Öffnung zum Schneidwerk 5 im Gehäuse 2 durch den Deckel 10 auch tatsächlich geschlossen ist.

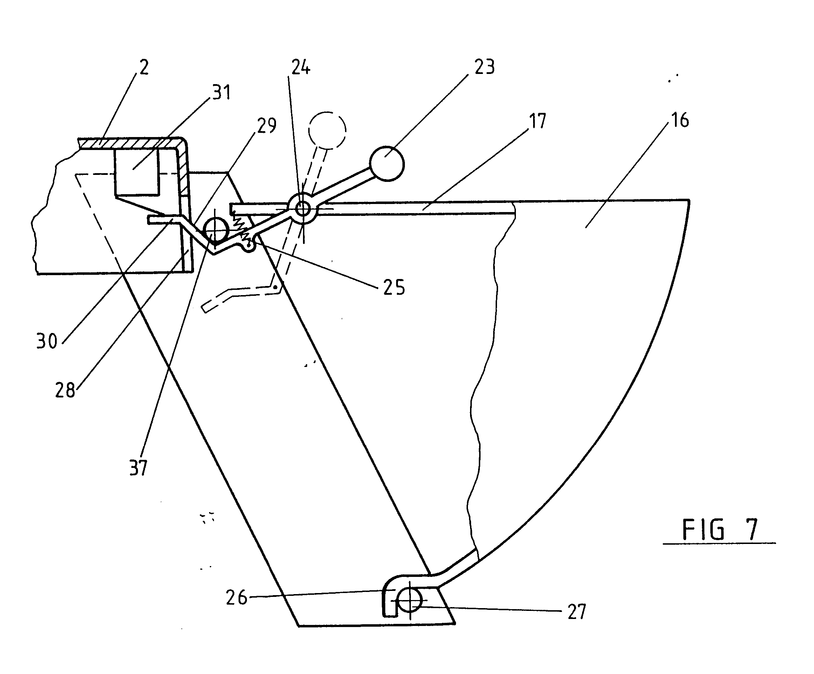

Bei der Ausführungsform nach Figur 7 ist die Betätigung des Tastschalters 31 über einen Betätigungshebel 30, der dem Tragegriff 25 zugeordnet ist, vorgesehen. Der Tastschalter 31 ist verdeckt im Gehäuse 2 oder im Traggestell angeordnet. Der Betätigungshebel 30 greift durch einen Durchbruch 28 im Gehäuse 2 hindurch. Der Tastschalter 31 ist mit seiner Taste im Bereich dieses Durchbruches 28 befestigt. Der Betätigungshebel 30 ist mit dem schwenkbaren Traggriff 23 verbunden. Dieser ist über ein Schwenklager 24 am Rahmen 17 der Auffangvorrichtung 16 schwenkbar angeordnet. Er wird durch eine Verschlußfeder 25 in einer niedergedrückten Stellung gehalten. In dieser Stellung durchgreift der Betätigungshebel 30 den Durchbruch 28 und stützt sich am Tastschalter 31 ab, wodurch der Stromkreis geschlossen wird. An der Seite weist der Betätigungshebel 30 eine schrägverlaufende Stützfläche 29 auf, die an einem Bolzen 37 anliegt. Die Einhängehaken 26 sind bei diesem Ausführungsbeispiel am unteren Ende des Rahmens 17 der Auffangvorrichtung 16 angeordnet. Sie übergreifen Einhängebolzen 27, die am Traggestell 3 angebracht sind. Die Auffangvorrichtung 16 ist hierzu einseitig auskragend angeordnet. Die aus dem in der Auffangvorrichtung 16 befindlichen Häckselgut resultierende Kraft erzeugt ein Drehmoment um die Einhängebolzen 27, das durch den federbelasteten Betätigungshebel 30 in Verbindung mit den am Bolzen 40 abgestützten Stützflächen 29 aufgefangen werden muß.

Bei Überschreiten eines bestimmten Gewichtes gleitet der Betätigungshebel 30 mit der Stützfläche 29 am Bolzen 37 nach unten und von der Anlage am Tastschalter 31 weg. Es kann eine Fangeinrichtung vorgesehen sein, die dafür sorgt, daß nur ein Abschwenken um ein kleines Maß von der Auswurföffnung 15 weg erfolgen kann. Die Ausschwenkbewegung muß jedoch so groß sein, daß ein sicheres Ausschalten, d.h. sichere Unterbrechung des Stromkreises durch den Tastschalter 31 gewährleistet ist, andererseits jedoch ein Durchgriff von Hand durch den freigegebenen Raum nicht möglich ist.

Der Tastschalter 31 betätigt eine elektromagnetische Schaltkupplung. Die Schaltkupplung ist dann, wenn sich der Betätigungshebel 30 in Anlage zum Tastschalter 31 befindet, eingeschaltet, d.h., es wird ein Drehmoment von der Antriebswelle 9 auf das rotierende Messer 6 übertragen. Sobald der Betätigungshebel 30 aus dem Durchbruch 28 herausbewegt wird, wird die Kupplung 38 in die Ausrückposition bewegt, so daß der Drehmomentfluß von der Antriebswelle 9 auf das Messer 6 des Schneidwerkes 5 unterbrochen wird. Gleichzeitig fällt eine Bremse ein, die auf die dem Messer 6 zugehörige Welle einwirkt und das Messer 6 stillsetzt.

### Bezugszeichenliste

- 1: Häcksler
- 2: Gehäuse
- 3: Traggestell
- 4: Räder
- 5: Schneidwerk
- 6: Messer
- 7: Gegenhalter
- 8: Lager
- 9: Antriebswelle
- 10: Deckel
- 11: Motor
- 12,13: Riemenscheibe
- 14: Treibriemen
- 15: Auswurföffnung
- 16: Auffangvorrichtung
- 17: Rahmen
- 18: Hülle
- 19: Klappe
- 20: Verschluß/Druckknöpfe
- 21: Öffnung
- 22: Einfüllöffnung
- 23: Tragegriff
- 24: Schwenklager des Tragegriffs
- 25: Verschlußfeder
- 26: Einhängehaken
- 27: Einhängebolzen
- 28: Durchgangsbohrung/Durchbruch
- 29: Stützfläche
- 30: Betätigungshebel
- 31: Tastschalter
- 32: Schraubknopf
- 33: Schraubknopflager am Rahmen
- 34: Gewindeschaft
- 35: Ende des Gewindeschaftes
- 36: Gewindebohrung
- 37: Bolzen

## Patentansprüche

1. Häcksler (1) zur Zerkleinerung von Gartenabfällen, mit einem Schneidwerk (5), das ein drehend angetriebenes Messer (6) und einen Gegenhalter (7) umfaßt, welche in einem Gehäuse (2) angeordnet sind, dessen Auswurföffnung (15) eine Auffangvorrichtung (16) für das Häckselgut zugeordnet ist,
dadurch gekennzeichnet,
daß die Auffangvorrichtung (16) aus einem von einer Hülle (18) umkleideten Rahmen (17) besteht und der Rahmen (17) Mittel (26) zur Festlegung am Gehäuse (2) oder Traggestell (3) des Häckslers (1) aufweist und daß der Rahmen (17) mit einer Betätigung (23,30;32) für eine das Schneidwerk (5) ein- oder ausschaltende Schalteinrichtung (31;36) versehen und das Schneidwerk (5) nur dann einschaltbar ist, wenn die Schalteinrichtung (31;36) von der Betätigung (23,30;32) beaufschlagt ist.

2. Häcksler nach Anspruch 1,
dadurch gekennzeichnet,
daß der Rahmen (17) aus im Querschnitt runden Stäben gebildet ist.

3. Häcksler nach Anspruch 1,
dadurch gekennzeichnet,
daß die Hülle (18) aus einer Kunststoff-Bahn gebildet ist.

4. Häcksler nach Anspruch 1 oder 3,
dadurch gekennzeichnet,
daß die Hülle (18) mit einer Gewebeeinlage verstärkt ist.

5. Häcksler nach Anspruch 1,
dadurch gekennzeichnet,
daß ein Teil der Hülle (18) als Klappe (19) gestaltet ist und mit dem festen Hüllenabschnitt durch Knöpfen, durch Druckknöpfe (20), Reißverschlüsse oder Klettverschluß verbunden ist.

6. Häcksler nach Anspruch 1,
dadurch gekennzeichnet,
daß die Schalteinrichtung ein elektrischer Tastschalter (31) ist, der verdeckt im Gehäuse (2) oder Traggestell (3) angeordnet ist.

7. Häcksler nach Anspruch 1,
dadurch gekennzeichnet,
daß die Schalteinrichtung eine Schaltkupplung (36) ist.

8. Häcksler nach Anspruch 1 oder 7,
dadurch gekennzeichnet,
daß zusätzlich eine Bremse (37) vorhanden ist.

9. Häcksler nach Anspruch 1,
dadurch gekennzeichnet,
daß die Betätigung ein am Rahmen (17) unverlierbar gehaltener Schraubknopf (32) ist, dessen Gewindeschaft (34) eine Durchgangsbohrung (28) des Gehäuses (2) durchgreift und mit seinem Ende (35) den korrespondierend zur Durchgangsbohrung (28) im Innern des Gehäuses (2) oder Gestells (3) angeordneten Tastschalter (31) im eingeschraubten Zustand beaufschlagt.

10. Häcksler nach Anspruch 1,
dadurch gekennzeichnet,
daß die Betätigung ein am Rahmen (17) unverlierbar gehaltener federbelasteter Bolzen ist, dessen Schaft eine Durchgangsbohrung (28) des Gehäuses (2) durchgreift und mit seinem Ende (35) den korrespondierend zur Durchgangsbohrung (28) im Innern des Gehäuses (2) oder Gestells (3) angeordneten Tastschalter (31) im eingeschobenen Zustand beaufschlagt.

11. Häcksler nach Anspruch 1,
dadurch gekennzeichnet,
daß die Betätigung aus einem am Rahmen (17) der Auffangvorrichtung (16) gegen die Kraft einer Verschlußfeder (25) schwenkbarer Tragegriff (23) ist, der über einen Betätigungshebel (30) einen Durchbruch (28) des Gehäuses (2) durchgreift und mit diesem den Tastschalter (31) beaufschlagt.

12. Häcksler nach Anspruch 11,
dadurch gekennzeichnet,
daß der Rahmen (17) über untere Anlenkpunkte (27) am Traggestell (3) schwenkbar abgestützt ist und der Betätigungshebel (30) zusätzlich mit einer Stützfläche (29) an einem Bolzen (37) abgestützt ist, zu dem er nach Überschreiten eines vorbestimmten Füllgewichtes der Auffangvorrichtung (16) gegen die Kraft der Verschlußfeder (25) außer Eingriff bringbar ist.

13. Häcksler nach Anspruch 11,
dadurch gekennzeichnet,
daß der Durchbruch (28), den der Betätigungshebel (30) durchgreift, einem das Schneidwerk (5) überdeckenden Deckel (10) des Gehäuses (2) zugeordnet ist.

14. Häcksler nach Anspruch 1,
dadurch gekennzeichnet,
daß die Mittel zur Festlegung des Rahmens (17) am Gehäuse (2) einem das Schneidwerk (5) überdeckenden Deckel (10) des Gehäuses (2) zugeordnet sind.

## Claims

1. A shredder (1) for shredding garden waste, having a cutting mechanism (15) comprising a rotatingly driven cutter (6) and a keeper (7) which are arranged in a housing (2) whose ejection aperture (15) is associated with a catching device (16) for the shredded material,
characterised in
that the catching device (16) consists of a frame (17) enclosed by a cover (18), that the frame (17) comprises means (26) permitting attachment to the housing (2) or carrying structure (3) of the shredder (1) and that the frame (17) is provided with an actuating member (23, 30; 32) for a switching device (31; 36) switching the cutting mechanism (5) on and off and that the cutting mechanism (5) can only be switched on if the switching device (31; 36) is loaded by the actuating member (23, 30; 32).

2. A shredder according to claim 1,
characterised in
that the frame (17) is formed of bars with a round cross-section.

3. A shredder according to claim 1,
characterised in
that the cover (18) is formed by a width of plastic material.

4. A shredder according to claim 1 or 3,
characterised in
that the cover (18) is reinforced by a woven insert.

5. A shredder according to claim 1,
characterised in
that part of the cover (18) is designed as a flap (19) and connected to the fixed cover portion by buttons, press studs (20), zips or Velcro.

6. A shredder according to claim 1,
characterised in
that the switching device is an electric push-button switch (31) which is arranged in the housing (2) or carrying structure (3) so as to be covered.

7. A shredder according to claim 1,
characterised in
that the switching device is a switching coupling (36).

8. A shredder according to claims 1 or 7,
characterised in
that, in addition, there is provided a brake (37).

9. A shredder according to claim 1,
characterised in
that the actuating member is a screw head (32) which is captively held at the frame (17), whose threaded shank (34) passes through a through-bore (28) in the housing (2) and which, with its end (35), in the screwed-in condition, loads the push-button switch (31) arranged inside the housing (2) or structure (3) so as to correspond to the through-bore (28).

10. A shredder according to claim 1,
characterised in
that the actuating member is a spring-loaded pin which is captively held at the frame (17), whose shank passes through a through-bore (28) of the housing (2) and which, with its end (35), in the inserted condition, loads the push-button switch (31) arranged inside the housing (2) or structure (3) so as to correspond to the through-bore (28).

11. A shredder according to claim 1,
characterised in
that the actuating member consists of a carrying handle (23) which is pivotable at the frame (17) of the catching device (16) against the force of a locking spring (25), which, via an actuating lever (30), passes through an aperture (28) in the housing (2) and loads the push-button switch (31) therewith.

12. A shredder according to claim 11,
characterised in
that the frame (17) is pivotably supported at the carrying structure (3) via lower articulation points (27) and that the actuating lever (30), via a supporting face (29), is additionally supported on a pin (37) from which it may be disengaged against the force of the locking spring (25) after a predetermined filling weight of the catching device (16) has been exceeded.

13. A shredder according to claim 11,
characterised in
that the aperture (28) which is passed through by the actuating lever (30) is associated with a lid (10) of the housing (2) covering the cutting mechanism (5).

14. A shredder according to claim 1,
characterised in
that the means for attaching the frame (17) to the housing (2) are associated with a lid (10) of the housing (2) covering the cutting mechanism (5).

## Revendications

1. Broyeur (1) pour broyer des déchets de jardinage, muni d'un dispositif de coupe (5) qui comporte un couteau (6) entraîné en rotation et un contre-appui (7) qui sont disposés dans un boîtier (2) à l'ouverture d'éjection (15) duquel est associé un dispositif collecteur (16) pour les produits broyés, caractérisé en ce que le dispositif collecteur (16) consiste en un cadre (17) entouré par une enveloppe (18) et le cadre (17) comporte des dispositifs (26) de fixation sur le boîtier (2) ou sur le châssis-support (3) du broyeur (1), et en ce que le cadre (17) est muni d'un dispositif d'actionnement (23, 30 ; 32) pour un organe de couplage (31 ; 36) qui met en marche ou arrête le dispositif de coupe (5) et le dispositif de coupe (5) ne peut être mis en marche que lorsque l'organe de couplage (31 ; 36) est sollicité par le dispositif d'actionnement (23, 30 ; 32).

2. Broyeur selon la revendication 1, caractérisé en ce que le cadre (17) est formé par des barres de section droite ronde.

3. Broyeur selon la revendication 1, caractérisé en ce que l'enveloppe (18) est formée par une bande de matière plastique.

4. Broyeur selon la revendication 1 ou 3, caractérisé en ce que l'enveloppe (18) est renforcée par une doublure en tissu.

5. Broyeur selon la revendication 1, caractérisé en ce qu'une partie de l'enveloppe (18) est sous forme de volet (19) et est reliée à la partie fixe de l'enveloppe par des boutons, des boutons-pression (20), des fermetures Eclair ou des fermetures auto-accrochantes.

6. Broyeur selon la revendication 1, caractérisé en ce que l'organe de couplage est un commutateur électrique à touche (31) qui est dissimulé dans le boîtier (2) ou dans le châssis-support (3).

7. Broyeur selon la revendication 1, caractérisé en ce que l'organe de couplage est un embrayage (36).

8. Broyeur selon la revendication 1 ou 7, caractérisé en ce qu'il est prévu en outre un frein (37).

9. Broyeur selon la revendication 1, caractérisé en ce que le dispositif d'actionnement est un bouton à vis (32) maintenu de manière inamovible sur le cadre (17), dont la tige filetée (34) traverse un orifice de passage (28) du boîtier (2) et, à l'état vissé, sollicite par son extrémité (35) le commutateur à touche (31) agencé à l'intérieur du boîtier (2) ou du châssis (3) dans une position correspondant à l'orifice de passage (28).

10. Broyeur selon la revendication 1, caractérisé en ce que le dispositif d'actionnement est un boulon chargé par ressort maintenu de manière inamovible dans le cadre (17), dont la tige traverse un orifice de passage (28) du boîtier (2) et, à l'état inséré, sollicite par son extrémité (35) le commutateur à touche (31) disposé à l'intérieur du boîtier (2) ou du châssis (3) dans une position correspondant à l'orifice de passage (28).

11. Broyeur selon la revendication 1, caractérisé en ce que le dispositif d'actionnement est une poignée de manutention (23) capable de pivoter sur le cadre (17) du dispositif collecteur (16) à l'encontre de la force d'un ressort à déclic (25) et qui traverse par l'intermédiaire d'un levier d'actionnement (30) une ouverture (28) du boîtier (2) et sollicite par celui-ci le commutateur à touche (31).

12. Broyeur selon la revendication 11, caractérisé en ce que le cadre (17) est soutenu à pivotement sur le châssis-support (3) par l'intermédiaire de points d'articulation inférieurs (27) et le levier d'actionnement (30) est soutenu en outre par une surface de soutien (29) sur une tige (37) de laquelle il peut être séparé à l'encontre de la force du ressort à déclic (25) après dépassement d'un poids de remplissage prédéterminé du dispositif collecteur (16).

13. Broyeur selon la revendication 11, caractérisé en ce que l'ouverture (28) que traverse le levier d'actionnement (30) est associée à un couvercle (10) du boîtier (2) qui recouvre le dispositif de coupe (5).

14. Broyeur selon la revendication 1, caractérisé en ce que les dispositifs pour fixer le cadre (17) sur le boîtier (2) sont associés à un couvercle (10) du boîtier (2) qui recouvre le dispositif de coupe (5).
